# EUROPEAN PATENT SPECIFICATION

(11) **EP 1 898 554 B1**
(45) Date of publication and mention of the grant of the patent: **11.02.2009**
(21) Application number: 06300930.2
(22) Date of filing: 06.09.2006
(51) Int. Cl.: H04L 12/24, H04L 12/26

(54) **Network resilience tool**
Werkzeug für Netzausfallsicherheit
Outil de résilience réseau

(43) Date of publication of application: 12.03.2008
(73) Proprietor: Alcatel Lucent, 75008 Paris (FR)
(72) Inventor: Dembeck, Lars, 71088 Holzgerlingen (DE); Broniecki, Ulrich, 15366 Neuenhagen (DE); Brockmann, Steffen, 71696 Möglingen (DE)
(74) Representative: Urlichs, Stefan

(56) References cited:
- EP-A2- 0 909 056
- WO-A1-20/04004217
- EPSTEIN H ET AL: "MANAGING OPTICAL NETWORKS" BELL LABS TECHNOLOGY, BELL LABORATORIES, MURREY HILL, NJ, US, vol. 6, no. 1, January 2001 (2001-01), pages 50-66, XP001099878 ISSN: 1089-7089
- HAJELA S: "HP OEMF: ALARM MANAGEMENT IN TELECOMMUNICATION NETWORKS" HEWLETT-PACKARD JOURNAL, HEWLETT-PACKARD CO. PALO ALTO, US, vol. 47, no. 5, October 1996 (1996-10), pages 22-30, XP000631663

## Description

### Field of the Invention

The present invention relates to the field of telecommunications and more particularly to a network resilience tool for use in a GMPLS-controlled optical network.

### Background of the Invention

The introduction of GMPLS into the management of control and data plane of optical networks provides rich capabilities; especially for the management of large networks that carry packet oriented as well as circuit oriented traffic. It is based on a set of protocols like RSVP-TE for signaling purposes, OSPF-TE for the link state routing and LMP for the link management. But the complexity of protocols is accompanied by a setup of many configuration parameters that partially depend on each other. On the other hand the network will be managed by personnel who may not be fully familiar with GMPLS details as well as with equipment internal adaptations thereof. Therefore, it often happens that malfunctions of a network element or of a whole network are caused by modifications of configuration parameters that do not take care of all dependencies.

Taking into account the current growth of optical transport networks it becomes necessary to create techniques that support a fast failure localization and recovery in the delivery phase of network products as well as in the maintenance phase. Additionally it is evident to perform sanity checks, i.e. upfront localization of issues before they actually cause problems. Sanity checks are required to prevent from misconfigurations that lead to degraded stability or resilience of the network, which may only become apparent after certain other seemingly uncorrelated events, e.g. a failure of a link in a different network section.

EP 1463235 describes a OSPF monitor which passively monitors traffic in the control plane of a GMPLS controlled transport network and filters OSPF protocol frames, with which the GMPLS controllers advertise the network topology and status. From the filtered protocol frames, the monitor extracts information about the topology and status of the transport network and displays these information graphically to a user. This tool, however, is not capable of detecting misconfiguration of internal parameter settings of the individual GMPLS controllers.

It is therefore an object of the present invention to provide a network resilience tool that interacts with GMPLS routing equipment in an optical network to detect and prevent misconfiguration in the network.

The article "Managing Optical Networks" by H. Epstein et al, Bell Labs Technical Journal, Jan. 2001, 50pp. describes a network management system controlling distributed GMPLS controllers in a GMPLS controlled network. The system has an element manager for configuring the network elements and a fault manager, which performs fault correlation to locate failures in the network.

The article "HP OEMF: Alarm Management in Telecommunications Networks" by S. Hajela, Hewlett Packard Journal Oct. 1996, 22pp describes an Elemenet Management Framework, which provides alarm management.

EP0909056 describes a network monitor which discovers the topology of a plurality of network elements, periodically polls their network interfaces, and analyzes the status of not responding network elements. The monitor can also correlate and/or suppress events.

### Summary of the Invention

The Object is achieved by a network resilience tool according to claim 1 and by o method according to claim 9.

The network resilience tool checks configuration of multiple GMPLS controllers part of a distributed control plane of a GMPLS-controlled transport network. According to the invention, the network resilience tool is adapted to connect to the GMPLS controllers, to extract configuration data including configuration parameter of the GMPLS protocol suite from each of these GMPLS controllers individually, to store the extracted sets of configuration data in a data storage, and to perform first sanity checks on individual sets of configuration data and second comparative sanity checks between selected sets of configuration data and report misconfigurations to a user. The network resilience tool operates independently from other tools and management devices.

The network resilience tool according to the invention discovers the network topology and the configuration parameters from an existing GMPLS-controlled optical network by extracting these from a GMPLS routing equipment rather than by sniffing the traffic between GMPLS routing devices. Hence the network resilience tool will work also with a remote network. The extraction uses an existing interface of the GMPLS routing equipment. The network resilience tool has thus no impact on the design of GMPLS routing equipment.

### Brief Description of the Drawings

Preferred embodiments of the present invention will now be described with reference to the accompanying drawings in which
- figure 1: shows connection of a network resilience tool to all GMPLS routing devices in an optical network directly from one node of the routing domain;
- figure 2: shows recursive discovery of network nodes by the network resilience tool using;
- figure 3: the software structure of a network resilience tool; and
- figure 4: the graphical user interface (GUI) of a network resilience tool.

### Detailed Description of the Invention

The technology for the growing convergence of circuit based and packet based networks is Generalized Multi-Protocol Label Switching (GMPLS). Each network element in a GMPLS-controlled network has assigned a GMPLS controller to manage control and data plane. This controller is often referred to as a GMPLS routing controller. The GMPLS routing controllers are interconnected by a dedicated packet switched data network, i.e., an Ethernet. The Ethernet is independent of the underlying transport network. Some connections in the Ethernet may use the data communication channel (DCC) available for this purpose in the overhead of transmission signals on the transport network. However, some other connections may lead via dedicated copper wires between the controllers. The topology of the Ethernet may be the same or similar as the topology of the transport network but may also be totally different. It should be understood, however, that the data network used to control the transport network is completely independent of the latter in the sense that changes in the configuration of the transport network by the control plane would not affect the data network at all.

A GMPLS based optical network element (NE) is for example Alcatel's 1678MCC which can be equipped with a GMPLS routing controller to manage control and data plane. For that purpose, a GMPLS routing controller must be configured with the parameters of the basic fiber interfaces, with the aggregated interfaces like e.g. TE (traffic engineering) links, and with the communication protocol interfaces to other GMPLS-controlled nodes of the network like LMP, OSPF, RSVP and IPCC.

Hence the configuration of a network presumes the setup of a huge variety of parameters of very different abstraction levels that partially depend on the topology of the network or on each other or that influence each other. Guidelines and manuals for staff personnel maintaining the network can support the configuration process but do not prevent from failures.

The present invention provides a network resilience tool that analyses a given GMPLS based network for inconsistencies in the configuration parameters of the different protocols and that generates proposals for a proper configuration.

The analysis starts with a minimal amount of data concerning the network, preferably with only the access parameters to the GMPLS controller of one node, and discovers in a first phase the configuration parameters of that node and the addresses of the neighbors. Recursively stepping from node to node across the network, the whole information will be retrieved and stored in a database of the tool.

This information will be used in a second phase to construct the topology of the network and to verify the parameters of all nodes. Based on a set of rules the network resilience tool detects failures in the configuration of the interfaces and protocols. This phase will include simple straight-forward criteria with no or minor cross-dependencies, e.g. verification of Link IDs, timer settings, naming and addressing conventions as well as complex criteria with dependencies among multiple networks resources, e.g. to correlate multiple parallel control channels and their mutual protection characteristics.

According to a preferred enhancement of the invention, the network resilience tool will in a third phase also derive and propose strategies for problem solutions based on network configuration rules and expert knowledge. This will lead to either firm solutions, e.g. how to adjust the identifier of a control channel (CCID) or how to set a timer value, or to recommendations for more complex situations that cannot exclusively be solved based on hard criteria. Such situations might merit the usage of artificial intelligence.

With these above mentioned features the network resilience tool can be used to verify the parameters of a network in a test laboratory before delivery to an operator, i.e. to detect commissioning errors, as well as to localize and eliminate configuration failures in the operator's network and thus to speed up the response to a failure notification.

To allow the network resilience tool to operate independently from other tools and management devices such as from the data stored in a regional manager, the network resilience tool is connected directly to one network element and extracts the configuration data directly thereof. This provides that the network resilience tool will access all data and prevents inconsistencies and failures originating from filtering and aggregation done by other tools. Nevertheless the network resilience tool can additionally be capable of interacting with such external management devices to verify and harmonize its results.

Typically, GMPLS routing equipment performs self-tests of its configuration parameters. When a GMPLS controller detects a failure in its configuration data, it will not propagate the failed resource to other nodes. Therefore listening to the management traffic between nodes ('sniffing') would not reveal such failures. According to a basic idea of the invention, the network resilience tool will hence retrieve the basic information by directly extracting it from the nodes via an existing interface, preferably via a command line interface (CLI).

Additionally it is preferred that the network resilience tool is able to analyze also remote networks. This can be easily done by establishing remote connections to the nodes without modifying the network, while sniffing would at least require installing an agent in that network.

### Topology discovery

For the sake of simplicity, it is assumed in the first embodiment that all GMPLS-controlled nodes belong to the same domain. Extension to a multi domain discovery can be achieved through the use of remote connections.

The network resilience tool is connected to an arbitrary GMPLS routing equipment in the network via a command line interface. Each GMPLS routing controller stores an OSPF database which contains a list of neighbors. This information will be extracted to generate 'local' views of the topology and to aggregate these to a common network view. In fact each GMPLS routing controller would also have a common network view, but which is typically not accessible via the CLI and is therefore not used by the invention.

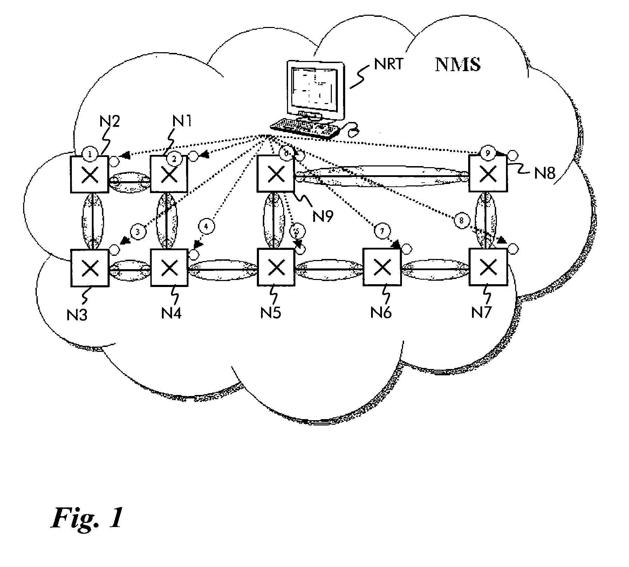

In the first embodiment, the network operator has to provide a list of node addresses with user names and passwords for the GMPLS routing controllers. This allows the network resilience tool to connect to all GMPLS routing controllers directly from one node of the routing domain as shown in figure 1. It shows a network resilience tool NRT that connects via direct connections shown as dotted arrows to nine GMPLS routing controllers of the network nodes N1-N9 in the network.

Throughout the below description, the term 'host' relates to a computer with an operating system running and the term 'node' will be used as a synonym for a GMPLS routing controller, since each manageable node in a GMPLS-controlled optical network has its own GMPLS routing controller.

The numbers in circles mark a possible arbitrary sequence for the evaluation of nodes N 1-N9. The algorithm used to discover the nodes has to ensure that every GMPLS-controlled node N 1-N9 will be discovered and that each node N1-N9 will be evaluated only once.

In short words, in the first embodiment the network resilience tool starts from a list of addresses of all GMPLS routing controller in the network, connects directly to each of them, one after the other, and extracts information about the local neighborhood to construct a view of the entire network.

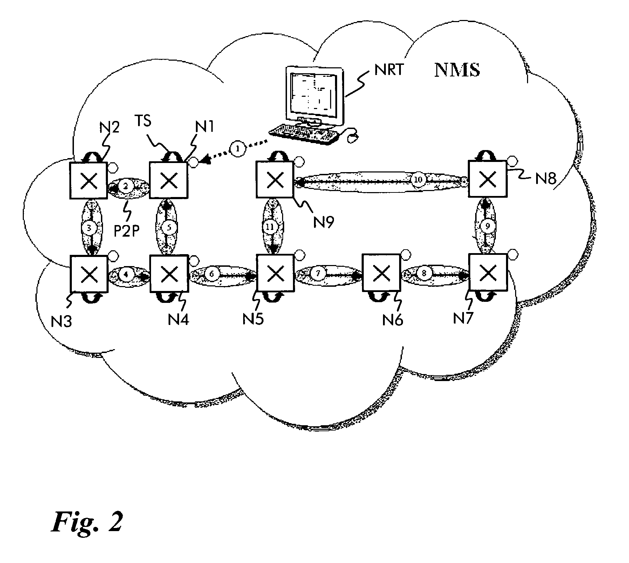

In the second embodiment, the network resilience tool NRT discovers all GMPLS routing controllers N 1-N9 of the network domain and also the neighborhood relations between these starting from only one GMPLS routing controller. This is achieved by recursively connecting to a GMPLS routing controller, extracting the list of neighbors and connecting to these - if one is not known already - using an algorithm which assures that all nodes will be discovered. This is shown in figure 2.

Each GMPLS routing controller N1-N9 has at least three different IP addresses in different network scopes as shown in table 1 below.

**Table 1: GMPLS routing controller address conventions**

| | 'ControllerAddress' | 'activeDCR' | 'activeEM' |
|---|---|---|---|
| usage | GMPLS CP protocol address | GMPLS Signalling Notify address | GMPLS controller management interface address |
| | Used by RSVP-TE, OSPF-TE and LMP | Used by RSVP-TE for fast failure reporting | Used e.g. for the interfaces (CLI via telnet and CORBA) |
| network | Non-routable (p2p) | Routable, reachable for other GMPLS controllers | Routable, reachable from NMS |

The neighboring node related OSPF parameters of the GMPLS routing controller belong to the 'ControllerAddress', a non-routable address in a peer-to-peer network. The access from NMS will be done using the routable 'activeEM' address. That leads to the problem, that the 'activeEM' address of a node will be known only in the initial step, for all other nodes only the 'ControllerAddress' can be discovered. That address is not routable and can hence be used from the neighboring nodes only. Therefore except for the first node, it will not be possible to connect to the GMPLS routing controllers directly using the 'ControllerAddress' address.

To solve this, a management session TS such as for example a telnet session is established to a neighboring host, instead. This session is used to evaluate the parameters of the respective GMPLS routing controller. For example a first telnet session can be established to 'localhost' as indicated by the arrows TS and afterwards a nested session can be established to the next neighbor. An ellipse P2P marks each such peer-to-peer network. This allows a cascaded access to all nodes N1-N9 in the network.

The procedure described above requires the knowledge of a valid user name and password for each host as well as for each GMPLS routing controller. In the present embodiment it is assumed that one user account is valid for all hosts and one user name and password for all GMPLS routing controllers. Otherwise, a whole list of accounts and passwords must be provided to the network resilience tool.

It cannot be assumed that the network resilience tool will be used at a host that is located in the same routing domain as the GMPLS routing controllers. It must be assumed, instead, that the network providers use a private address space for the GMPLS routing controllers to protect these from malicious access from outside. It may be necessary to establish a remote session (or a cascaded set of sessions) to one node in the domain. In that case it is necessary to provide a list of intermediate hosts with valid user names and passwords.

Starting from one host in the routing domain of the GMPLS routing controllers the nodes will be discovered according to the above mentioned central (fig. 1) or cascaded (fig. 2) access schemes. However, before connecting to a GMPLS routing controller the accessibility of the host will be verified evaluating the response to a ping command.

### Tool specification

The network resilience tool preferably runs on different operating systems, for example on LINUX PCs as well as on Microsoft Windows systems. It has a simple graphical user interface (GUI) that allows to set main parameters and to start or cancel the operation. Results will be displayed and printed to an ASCII file.

The network resilience tool will use the Command Line Interface (CLI) of the GMPLS routing controller to extract configuration data. Requests are restricted to SHOW commands, i.e. to non-modifying operations.

The extracted data will be stored internally. The internal data storage is organized as a database. Alternatively, an external database could be used.

According to a preferred embodiment, the network resilience tool provides a scripting mechanism which allows to define useful parameter thresholds or timer values outside the network resilience tool and provide the ability to expand checks to further parameters. This allows to describe extracted parameters and checks in a formalized matter.

In this case, the network resilience tool provides a flexible framework for the network sanity checks. The specific implementation of the checks is then defined in script files that will be read by the network resilience tool. This allows to adapt the checks to the network devices actually used (e.g. crossconnects) and to the software versions of the GMPLS routing controllers.

For the extraction each parameter will be defined by a unique keyword for the data storage and handling, by a CLI command to be sent to the GMPLS routing controller, or by a keyword to search for in response of the GMPLS routing controller and by a format specification. In general the network resilience tool will handle parameters related to a node and parameters related to an interface. In addition, parameters can be introduced that are related to a path.

For the checking process each check will be defined by a checking rule, by used parameters, by possible threshold or allowed values and by a 'fault classification' in case of a rule violation.

Intra-Node checks will be performed on node or interface parameters, possible checking rules are:
- Is the value of the parameter an IP address (and netmask) that is assigned to the node?
- Is the value of the parameter an IP address and is that reachable (ping)?
- Is the value of the parameter in a list of strings?
- Is the value of the parameter less than or equal to a fixed value or a value of another parameter?
- Is the value of the parameter greater or equal a fixed value or a value of another parameter?
- Is the value of the parameter in the list of neighbors ?

Checks can also be used as preconditions for other checks, the results of checks can be combined logically. Therefore it is possible to define checks that will be performed only when other ones have been succeeded.

Possible Inter-Node checking rules are:
- Is the value of the parameter the same for all nodes?
- Is the value of the parameter the same for all neighbors?
- Is the value of the parameter unique for all nodes (i.e. are the values for all nodes different)?
- Do the 'remote' interface parameters match at both ends?
- Are the values of the interface parameter the same at both ends?

Each check will lead to a result that is one of 'Success', 'ProcessError', 'ConfigurationFailure' or 'Warning'. A 'ProcessError' means that a command has failed, e.g. the connection establishment to a GMPLS routing controller has failed. A 'Configuration Failure' is a violation of a compulsory condition, a 'Warning' is a violation of a recommended condition. It should be also possible to define a failure severity with a higher level of granularity.

The mnemonic of the check, the parameter, the result and in case of 'ProcessError', 'ConfigurationFailure' or 'Warning' a short description will be printed to a file. In detail a stored message contains in the preferred embodiment the following information:
- the related node ID(s),
- the interface type and ID(s) (if applicable),
- the parameter name and value,
- the kind of check,
- the result of the check, and
- the severity.

A 'silent' mode can additionally be provided restricting the output from successful checks to the following events:
- Connection to a GMPLS routing controller
- Main parameters of the GMPLS routing controller including the list of neighbors
- One success message for each kind of interfaces (if available)
- One success message for each checked pair of nodes.

When the network resilience tool has detected a failure, error or warning the appropriate event will always be printed out.

The network resilience tool provides a window that displays the contents of that file as a scrolled list. The lines of the list can be marked with different colors according to the detected results, e.g. green for 'Success', dark red for 'ProcessError', light red for 'Configuration Failure' and blue for 'Warning'. Additionally it provides a set of filters to adapt the output to specific needs. For example it shall be possible to restrict the displayed results to the data bearer parameters only. Filtered results can be displayed and also stored as files.

### Software Structure

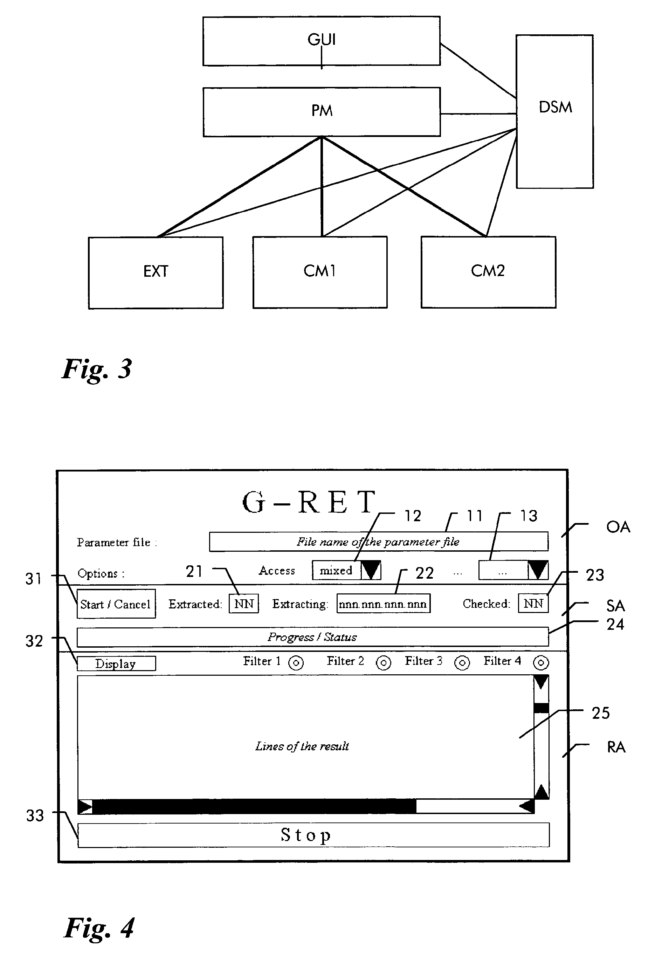

The software structure for network resilience tool is illustrated in figure 3. The processing will be divided in a graphical user interface GUI, a process manager PM, a data extraction module EXT and in two different check modules CM1, CM2. These parts are preferably organized as separate processes or threads to allow parallel processing. A data storage module DSM is used by all processes to manage the data. Bold lines in figure 3 indicate a call interface between the modules while thin lines indicate a data interface.

The first check module CM1 is an intra-node check process, which contains checks for single nodes and the second check module CM2 is an inter-node check process containing cross-checks of parameters from different nodes.

After defining the parameters of the network to be checked and the kind of processing in the graphical user interface GUI, the process manager PM will be started. The process manager PM initializes the data storage module DSM, establishes a connection to the network to be checked and starts the extraction process EXT for the first GMPLS routing controller. The extraction process EXT extracts the information, stores it in the data storage module together with status and progress information and finally returns the list of neighbors to the process manager PM. Process manager PM checks for a further node and if so, starts the extraction process EXT for such further node.

When all nodes have been extracted process manager PM starts for each one the first check and after that for each peer of nodes the second check module CM2. The checking results will be stored in the data storage module DSM. The progress of each process can be watched at the graphical user interface GUI.

Having finished all checks, the status will be displayed at the graphical user interface GUI, and the results can be filtered and displayed.

The structure described above supports a flexible adaptation to different situations. For example it is possible to run the Intra-Node Check process CM1 for a node at the same time when the extraction process EXT evaluates another node. It is also possible to start the program manager PM as a batch job and to evaluate the results using the graphical user interface GUI after the batch has finished.

After a restart, program manager PM evaluates the status and progress information in data storage module DSM, possibly deletes the data stored by the unfinished processes and restarts the extraction process EXT for those nodes only that have not been extracted, as well as it starts the checks CM1, CM2 for those nodes and those pairs of nodes that have not been passed yet.

A template for the GUI window is shown in figure 4. The window has been divided into three areas: the options area OA located in the upper part, the status area SA in the middle part and the result area RA in the lower part. Fields 11, 12, and 13 in that template are input fields that can be modified by the user (e.g. file name input), fields 21, 22, 23, 24, and 25 are output fields and fields 31, 32, and 33 are buttons.

In the options area OA, the parameter file will be specified as well as additional options managing the processing of the network resilience tool. The fields 11, 12, 13 can be modified as long as the parameter extraction has not started.

The status area SA contains a 'Start' button 31, a progress report 21, 22, 23 and a status line 24. Pressing the 'start' button initiates the extraction and checking procedure, the button changes to a 'Cancel' button until the checking has finished. The progress of the procedure will be demonstrated by displaying the number of extracted GMPLS routing controllers, the IP address of the current node that is extracting and by the number of checked GMPLS routing controllers.

After extraction and checking are finished, results can be viewed in the result area RA. Filters 1-4 exist that can be activated or deactivated. Pressing the 'Display' button 32 starts the display in the scroll window 25 below. Pressing the 'Stop' button 33 will cancel all processes and will terminate the network resilience tool.

It has to be noted that the invention is not restricted to the above described embodiments of the network resilience tool, but that certain modifications and improvements of the invention can be made. For example, variable filters can be implemented using scripting mechanism.

Each line in the scroll window 25 represents one result message. It may be useful to restrict the amount of information per line to main parts. In that case it should be possible to select a message and to display full information for it.

Information in the scroll window 25 could be linked with the appropriate information in data storage module DSM. E.g. a message explaining the mismatch of configuration data at both ends of a data bearer shall be linked with the respective data bearer data stored in data storage module DSM. Clicking on a link address will open the data of that link.

An additional (optional) window can be provided which shows the telnet processing, e.g. the commands and the appropriate responses.

The extraction process EXT will be started with the IP address of the GMPLS routing controller and with a connection to a host as parameters. Based on the existing connection a Telnet session will be established to the CLI of the GMPLS routing controller, all parameters will be extracted using the appropriate commands and evaluating the response messages, and data will be stored in an internal structure. Finally the data structure will be dumped to data storage module DSM, a success status and the list of neighbors will be passed to program manager PM. Preferably the 'ControllerAddress' will be used as ID.

The intra-node checks process CM1 will be started with an internal identifier of a GMPLS routing controller, e.g., with the 'ControllerAddress'. Process CM1 reads the related parameters from the data storage module DSM and performs the checks as described above. Messages will be written to data storage module DSM. Finally a success status will be passed to program manager PM.

The inter-node checks process CM2 will be started with internal identifiers of both GMPLS routing controllers. It reads the related parameters from data storage module DSM and performs the checks described above. Messages will be written to data storage module DSM. Finally a success status will be passed to program manager PM.

A special case of the inter-node checks will be the check of all nodes for the same value of selected parameters.

In a simple embodiment, the data storage module DSM can be realized as a set of files and a set of routines used to access the contents of these files. Each GMPLS routing controller will be described by a separate ASCII file that will be created and written by the extraction process EXT. Such ASCII file could be for example in XML format. It will be read by the intra-node checks process CM1 and inter-node checks process CM2 as well as by graphical user interface GUI. The routines are used to
- dump the whole configuration data of a GMPLS routing controller into the file,
- read the whole configuration data of a GMPLS routing controller from a file, and
- preferably also to access selected parameter values.

A further set of files contains the messages produced by the extraction module EXT and by the checking processes CM1, CM2. Related routines are used to
- append messages related to one GMPLS routing controller to a file,
- append messages related to a pair of GMPLS routing controllers to a file,
- sequentially read a message from a file.

Additionally the status and progress information will be stored in a file. Such data will be used to manage the processing, to display the progress of the extraction and of the checks in the GUI window and to define the restart point after a crash. It contains:
- the list of known nodes (including the required path and access data),
- the extraction state of each node (unextracted) | extracting | extracted),
- the intra-node check state of each node (unchecked I checking | checked),
- the inter-node check state of each pair of nodes (unchecked checking | checked), and
- possibly also some failure status information of the processes.

In the following, examples of useful checks will be given, which might be performed in any combination by the network resilience tool described above. It should be noted that this list is non-exclusive and non-limiting. Other test may prove useful during employment of the tool in the field and can easily be implemented by those skilled in the art, preferably using the above described scripting mechanism.

### Configuration parameters

Certain parameters of the different protocols are relevant for the proper configuration of a GMPLS based network. An exemplary list will be summarized below.

The routing protocol OSPF-TE which is defined in IETF RFC 2328 uses a Hello protocol and authentication. The following parameters need to be configured:
- OSPF interface type
- OSPF Area ID
- OSPF Hellolnterval
- OSPF HelloDeadlnterval
- OSPF AuType
- OSPF Authentication key

In the GMPLS routing controller, the OSPF-TE protocol parameters will be used for data plane routing (DPR) setup.

RFC 3209 and RFC 3473 define the protocol RSVP-TE, which uses a Hello protocol for which the following parameters need to be configured:
- RSVP Restart Time
- RSVP Recovery Time
- RSVP Hello Time(hello_interval)
- RSVP Hello Dead

Similarly, the protocol LMP as defined in RFC 4204 uses a Hello protocol for which the following parameters need to be configured:
- LMP Hellolnterval
- LMP HelloDeadlnterval
- Control channel identifier

### Consistency Checks

The following values and dependencies between configuration parameters of each single node will be verified:
- The GMPLS routing controller must be reachable.
- The timer values of the communication protocols must match useful thresholds. That belongs to the Hello time parameters (DPR, RSVP, LMP) that define the interval for Hello messages and to the HelloDead interval parameters defining the time to declare a neighbor down in case of not receiving Hello messages.
- Selected parameters of the interfaces must match useful values.
- Check for conformance to restrictions and recommendations. For example E-NNI and I-NNI cannot be configured both on one GMPLS routing controller node.

When a host is reachable, then a telnet session to the CLI of the GMPLS routing controller will be established. Using that session the required parameters will be extracted. Establishing the session to the CLI of the GMPLS routing controller the software version will be extracted. The value will be stored as an additional node parameter.

Comparing the configuration of different GMPLS routing controllers, the following inter-node dependencies will be verified for each pair of neighboring nodes:
- The basic node parameters of all nodes must be in the same range, for example same OSPF timer values.
- The data bearer interface parameters (addressing and other) on one side must match the parameters on the other side.
- The TE link interface parameters on one side must match the parameters on the other side.
- Some general protocol parameters must match on both sides of a connection or on all nodes.

The OSPF Hellolnterval and RouterDeadlnterval values have to be the same for all routers attached to a common network. Thus the DPR HelloTime parameters of all nodes must be the same as well as the DPR HelloDead values.

## Claims

1. A network resilience tool (NRT) for checking configuration of multiple GMPLS controllers (N 1-N8) which are part of a distributed control plane (NMS) of a GMPLS-controlled transport network, wherein said GMPLS controllers are interconnected through a dedicated data network and communicate through a set of protocols; wherein said network resilience tool (NRT) is adapted
- to connect to said GMPLS controllers (N1-N8);
- to extract configuration data from each of said GMPLS controllers (N 1-N8) individually;
- to store these extracted sets of configuration data in a data storage (DSM); and
- to perform first sanity checks on individual sets of configuration data and second comparative sanity checks between selected sets of configuration data and report misconfigurations to a user
wherein said configuration data comprise configuration parameters of protocols from the GMPLS protocol suite and
wherein said network resilience tool is adapted to operate independently from other tools and management devices by connecting to an arbitrary one of said GMPLS controllers (N1-N8) via an existing interface.

2. A network resilience tool (NRT) according to claim 1, comprising:
- an extraction module (EXT) for connecting to said GMPLS controllers (N1-N8) and extracting said configuration data therefrom;
- a data storage module (DSM) for storing said sets of configuration data;
- a first check module (CM1) for performing said first sanity checks on individual sets of configuration data;
- a second check module (CM2) for performing said second sanity checks between selected sets of configuration data; and
- a graphical user interface (GUI) for presenting detected misconfigurations to a user.

3. A network resilience tool (NRT) according to claim 1, further comprising a process manager (PM) adapted to process said extracted configuration data.

4. A network resilience tool (NRT) according to claim 1, which is adapted to determine from said sets of configuration data list of neighboring network nodes for each GMPLS controller (N1-N8) and to construct from this neighborhood relationship a network view.

5. A network resilience tool (NRT) according to claim 1, which is adapted to store a list of addresses of all GMPLS controllers (N1-N8) to be checked and to connect directly to each of said GMPLS controllers (N1 -N8) to extract said configuration data.

6. A network resilience tool (NRT) according to claim 1, which is adapted to connect directly to a first GMPLS controller (N1), to extract its configuration data, to determine from said configuration data network addresses of GMPLS controllers (N2, N4) of neighboring network nodes, to connect then to one of the neighboring GMPLS controllers (N2) and repeat these steps until all GMPLS controllers (N2-N9) to be checked have been discovered and their configuration data extracted.

7. A network resilience tool (NRT) according to claim 6, which is adapted to establish a first management session (TS) to said first GMPLS controller, to establish within said first management session a nested management session to a neighboring GMPLS controller (N2) to be connected, and to continue cascading management sessions to connect to farther GMPLS controllers (N3-N8).

8. A network resilience tool (NRT) according to claim 1, which is adapted to store at least one script file defining configuration parameters to be extracted from said GMPLS controllers (N1-N8) and first and second sanity checks to be performed on said parameters.

9. A method of checking configuration of multiple GMPLS controllers (N 1-N8) which are part of a distributed control plane (NMS) of a GMPLS-controlled transport network, wherein said GMPLS controllers (N1-N8) are interconnected through a dedicated data network and communicate through a set of protocols; said method comprising the steps of:
- connecting a network resilience tool to said GMPLS controllers (N1-N8);
- extracting configuration data from each of said GMPLS controllers (N1-N8) individually;
- storing these extracted sets of configuration data in a data storage (DSM); and
- performing by said network resilience tool first sanity checks on individual sets of configuration data and second comparative sanity checks between selected sets of configuration data and reporting misconfigurations to a user;
wherein said configuration data comprise configuration parameters of protocols from the GMPLS protocol suite and
wherein said network resilience tool operates independently from other tools and management devices by connecting to on arbitrary one of said GMPLS controller (N1-N8) via an existing interface.

10. A method according to claim 9, wherein said step of connecting includes directly connecting to each of said GMPLS controllers (N1-N8).

11. A method according to claim 9, wherein said step of connecting includes directly connecting to a first of said GMPLS controllers (N1) and cascading management sessions via interjacent GMPLS controllers to connect to farther GMPLS controllers (N2-N8).

## Patentansprüche

1. Ein Werkzeug für Netzausfallsicherheit (NRT) zum Prüfen der Konfiguration von multiplen GMPLS-Steuereinheiten (N1 - N8), welche Bestandteil einer verteilten Steuerebene (NMS) eines GMPLS-gesteuerten Transportnetzwerks sind, wobei die besagten GMPLS-Steuereinheiten über ein dediziertes Datennetzwerk miteinander verbunden sind und über eine Reihe von Protokollen miteinander kommunizieren; wobei das besagte Werkzeug für Netzausfallsicherheit (NRT) fähig ist,
- an die besagten GMPLS-Steuereinheiten (N1 - N8) angeschlossen zu werden;
- individuell aus jeder der besagten GMPLS-Steuereinheiten (N1 - N8) Konfigurationsdaten zu extrahieren:
- diese extrahierten Konfigurationsdatensätze in einem Datenspeicher (DSM) zu speichern; und
- erste Sanity-Checks auf individuellen Konfigurationsdatensätzen und zweite komparative Sanity-Checks zwischen ausgewählten Konfigurationsdatensätzen durchzuführen und Fehlkonfigurationen an einen Nutzer zu melden:
wobei die besagten Konfigurationsdaten Konfigurationsparameter von Protokollen aus der GMPLS-Protokollfolge umfassen, und
wobei das besagte Werkzeug für Netzausfallsicherheit fähig ist, unabhängig von anderen Werkzeugen und Verwaltungsvorrichtungen arbeitet, indem es sich über eine bestehende Schnittstelle an eine beliebige der GMPLS-Steuereinheiten (N1 - N8) anschließt.

2. Ein Werkzeug für Natzausfallsicherheit (NRT) nach Anspruch 1, umfassend:
- Ein Extrahlerungsmodul (EXT), welches an die besagten GMPLS-Steuereinheiten (N1 - N8) angeschlossen wird und aus diesen die besagten Konfigurationsdaten extrahiert;
- ein Datenspeicherungsmodul (DSM) zum Speichern der besagten Konfigurationsdatensätze;
- ein erstes Testmodul (CM1) zum Durchführen der besagten ersten Sanity-Checks an individuellen Konfigurationsdatensätzen;
- ein zweites Testmodul (CM2) zum Durchführen der besagten zweiten Sanity-Checks an ausgewählten Konfigurationsdatensätzen; und
- eine grafische Nutzerschnittstelle (GUI) zum Darstellen von erkannten Fehlkonfigurationen für einen Nutzer.

3. Ein Werkzeug für Netzausfallsicherheit (NRT) nach Anspruch 1, welches weiterhin einen Prozessverwalter (PM) umfasst, der fähig ist die besagten extrahierten Konfigurationsdaten zu verarbeiten.

4. Ein Werkzeug für Netzausfallsicherheit (NRT) nach Anspruch 1, welches fähig ist, aus den besagten Konfigurationssätzen eine Datenliste von benachbarten Netzwerkknoten für jede GMPLS-Steuereinheit (N1 - N8) zu ermitteln und aus dieser Nachbarschaftsbeziehung eine neue Netzwerksicht zu erstellen.

5. Ein Werkzeug für Netzausfallsicherheit (NRT) nach Anspruch 1, welches fähig ist, eine Liste von Adressen aller zu prüfenden GMPLS-Steuereinheiten (N1 - N8) zu speichern und sich direkt an eine jede der besagten GMPLS-Steuereinheiten (N1 - N8) anzuschließen, um die besagten Konfigurationsdaten zu extrahieren.

6. Ein Werkzeug für Netzausfallsicherheit (NRT) nach Anspruch 1, welches fähig ist, sich direkt an eine erste GMPLS-Steuereinheit (N1) anzuschließen, um deren Konfigurationsdaten zu extrahieren, aus den besagten Konfigurationsdaten Netzwerkadressen von GMPLS-Steuereinheiten (N2, N4) von benachbarten Netzwerkknoten zu ermitteln, sich anschließend an eine der benachbarten GMPLS-Steuereinheiten (N2) anzuschließen und diese Schritte zu wiederholen, bis alle zu prüfenden GMPLS-Steuereinheiten (N2 - N9) erkannt und deren Konfigurationsdaten extrahiert wurden.

7. Ein Werkzeug für Netzausfallsicherheit (NRT) nach Anspruch 1, welches fähig ist, eine erste Verwaltungssitzung (TS) mit der besagten GMPLS-Steuereinheit aufzubauen, während der besagten ersten Verwaltungssitzung eine verschachtelte Verwaltungssitzung mit einer anzuschließenden benachbarten GMPLS-Steuereinheit (N2) aufzubauen, und das Kaskadieren von Verwaltungssitzungen zum Anschließen an weitere GMPLS-Steuereinheiten (N3 - N8) fortzusetzen.

8. Ein Werkzeug für Netzausfallsicherheit (NRT) nach Anspruch 1, welches fähig ist, mindestens eine Skriptdatei, welche die aus den besagten GMPLS-Steuereinheiten (N1 - N8) zu extrahierenden Konfigurationsparameter definiert, und die besagten ersten und zweiten an den besagten Parametern durchzuführenden Sanity-Checks zu speichern.

9. Ein Verfahren zum Prüfen der Konfiguration von multiplen GMPLS-Steuereinheiten (N1 - N8), welche Bestandteil einer verteilten Steuerebene (NMS) eines GMPLS-gesteuerten Transportnetzwerks sind, wobei die besagten GMPLS-Steuereinheiten über ein dediziertes Datennetzwerk miteinander verbunden sind und über eine Reihe von Protokollen miteinander kommunizieren; wobei das besagte Verfahren die folgenden Schritte umfasst:
- Anschließen eines Werkzeugs für Netzausfallsicherheit an die besagten GMPLS-Steuereinheiten (N1 - N8);
- individuelles Extrahieren der Konfigurationsdaten aus einer jeden der besagten GMPLS-Steuereinheiten (N1 - N8);
- Speichern dieser extrahierten Konfigurationsdatensätze in einem Datenspeicher (DSM); und
- Durchführen durch das besagte Werkzeug für Netzausfallsicherheit von ersten Sanity-Checks auf individuellen Konfigurationsdatensätzen und von zweiten komparativen Sanity-Checks zwischen ausgewählten Konfigurationsdatensätzen und Melden von Fehlkonfigurationen an einen Nutzer;
wobei die besagten Konfigurationsdaten Konfigurationsparameter von Protokollen aus der GMPLS-Protokollfolge umfassen, und
wobei das besagte Werkzeug für Netzausfallsicherheit unabhängig von anderen Werkzeugen und Verwaltungsvorrichtungen arbeitet, indem es sich über eine bestehende Schnittstelle an eine beliebige der GMPLS-Steuereinheiten (N1 - N8) anschließt.

10. Ein Verfahren nach Anspruch 9, wobei der besagte Schritt des Anschließens das direkte Anschließen an eine jede der besagten GMPLS-Steuereinheiten (N1 - N8) umfasst.

11. Ein Verfahren nach Anspruch 9, wobei der besagte Schritt des Anschließens das direkte Anschließen an eine erste der besagten GMPLS-Steuereinheiten (N1) sowie das Kaskadieren von Verwaltungssitzungen über dazwischen liegende GMPLS-Steuereinheiten zum Anschließen an weitere GMPLS-Steuereinheiten (N2 - N8) umfasst.

## Revendications

1. Outil de récupération pour un réseau (NRT) destiné à contrôler la configuration de multiples contrôleurs GMPLS (N1-N8) qui font partie d'un plan de contrôle réparti (NMS) d'un réseau de transport contrôlé par GMPLS, dans lequel lesdits contrôleurs GMPLS sont interconnectés par l'intermédiaire d'un réseau de données dédié et communiquent grâce à un ensemble de protocoles ; dans lequel ledit outil de récupération de réseau (NRT) est adapté pour
connecter lesdits contrôleurs GMPLS (N1-N8) ;
extraire les données de configuration de chacun desdits contrôleurs GMPLS (N1-N8) individuels ;
stocker ces ensembles de données de configuration extraits dans une mémoire de données (DSM) ; et
effectuer des premiers contrôles de santé sur les ensembles individuels de données de configuration et des seconds contrôles de santé comparatifs entre des ensembles sélectionnés de données de configuration et rapporter les problèmes de configuration à un utilisateur ;
dans lequel lesdites données de configuration comprennent des paramètres de configuration de protocoles de la suite de protocoles GMPLS, et
dans lequel ledit outil de récupération de réseau est adapté pour fonctionner indépendamment d'autres outils et dispositifs de gestion en étant connecté à l'un arbitraire desdits contrôleurs GMPLS (N1-N8) via une interface existante.

2. Outil de récupération de réseau (NRT) selon la revendication 1, comprenant :
un module d'extraction (EXT) destiné à connecter lesdits contrôleurs GMPLS (N1-N8) et à en extraire lesdites données de configuration ;
un module de stockage de données (DSM) destiné à stocker lesdits ensembles de données de configuration ;
un premier module de contrôle (CM1) destiné à effectuer lesdits premiers contrôles de santé sur les ensembles individuels de données de configuration ;
un second module de contrôle (CM2) destiné à effectuer lesdits seconds contrôles de santé entre les ensembles sélectionnés de données de configuration ; et
une interface utilisateur graphique (GUI) destinée à présenter les problèmes de configuration détectés à un utilisateur.

3. Outil de récupération de réseau (NRT) selon la revendication 1, comprenant en outre un gestionnaire de processus (PM) adapté pour traiter lesdites données de configuration extraites.

4. Outil de récupération de réseau (NRT) selon la revendication 1, adapté pour déterminer à partir desdits ensembles de données de configuration une liste de noeuds de réseau voisins pour chaque contrôleur GMPLS (N1-N8) et pour construire à partir de ces relations de voisinage une vue du réseau.

5. Outil de récupération de réseau (NRT) selon la revendication 1, adapté pour stocker une liste d'adresses de tous les contrôleurs GMPLS (N1-N8) à contrôler et pour se connecter directement à chacun desdits contrôleurs GMPLS (N1-N8) pour extraire lesdites données de configuration.

6. Outil de récupération de réseau (NRT) selon la revendication 1, adapté pour se connecter directement à un premier contrôleur GMPLS (N1), pour extraire ses données de configuration, pour déterminer à partir desdites données de configuration les adresses de réseau des contrôleurs GMPLS (N2, N4) de noeuds de réseau voisins, pour se connecter ensuite à l'un des contrôleurs GMPLS voisins (N2) et répéter ces étapes jusqu'à ce que tous les contrôleurs GMPLS (N2-N9) à contrôler soient découverts et leurs données de configuration extraites.

7. Outil de récupération de réseau (NRT) selon la revendication 6, adapté pour établir une première session de gestion (TS) avec ledit premier contrôleur GMPLS, pour établir dans la première session de gestion une session de gestion imbriquée avec un contrôleur GMPLS voisin (N2) auquel se connecter, et pour continuer les sessions de gestion en cascade pour se connecter à d'autres contrôleurs GMPLS (N3-N8).

8. Outil de récupération de réseau (NRT) selon la revendication 1, adapté pour stocker au moins un fichier script définissant les paramètres de configuration à extraire desdits contrôleurs GMPLS (N1-N8) et les premiers et seconds contrôles de santé à effectuer sur lesdits paramètres.

9. Procédé de contrôle de la configuration de multiples contrôleurs GMPLS (N1-N8) qui font partie d'un plan de contrôle réparti (NMS) d'un réseau de transport contrôlé par GMPLS, dans lequel lesdits contrôleurs GMPLS (N1-N8) sont interconnectés par l'intermédiaire d'un réseau de données dédié et communiquent grâce à un ensemble de protocoles ; ledit procédé comprenant les étapes suivantes :
connexion d'un outil de récupération de réseau auxdits contrôleurs GMPLS (N1-N8) ;
extraction des données de configuration de chacun desdits contrôleurs GMPLS (N1-N8) individuels :
stockage de ces ensembles de données de configuration extraits dans une mémoire de données (DSM) ; et
exécution par ledit outil de récupération de réseau de premiers contrôles de santé sur les ensembles individuels de données de configuration et de seconds contrôles de santé comparatifs entre des ensembles sélectionnés de données de configuration et rapport des problèmes de configuration à un utilisateur ;
dans lequel lesdites données de configuration comprennent des paramètres de configuration de protocoles de la suite de protocoles GMPLS, et
dans lequel ledit outil de récupération de réseau fonctionne indépendamment d'autres outils et dispositifs de gestion en étant connecté à l'un arbitraire desdits contrôleurs GMPLS (N1-N8) via une interface existante.

10. Procédé selon la revendication 9, dans lequel ladite étape de connexion comprend la connexion directe à chacun desdits contrôleurs GMPLS (N1-N8).

11. Procédé selon la revendication 9, dans lequel ladite étape de connexion comprend la connexion directe à un premier desdits contrôleurs GMPLS (N1) et l'établissement en cascade de sessions de gestion via les contrôleurs GMPLS intercalés pour se connecter à d'autres contrôleurs GMPLS (N2-N8).
